# EUROPEAN PATENT APPLICATION

(11) **EP 3 219 692 A1**
(43) Date of publication of application: **20.09.2017**
(21) Application number: 16305289.7
(22) Date of filing: 16.03.2016
(51) Int. Cl.: C04B 35/44, C04B 35/52, C04B 5/06, B22D 11/116, B22D 11/119, C21C 7/00, C21C 7/04, C04B 41/00, C04B 41/45, C01F 7/16, F27D 1/00, C04B 111/00, C04B 111/42

(54) **REACTIVE MATERIAL BASED ON CALCIUM ALUMINATE AND CARBON, ITS PROCESS OF PREPARATION AND ITS USES FOR REFINING METAL MELTS OR SLAGS**

(71) Applicant: Kerneos S.A., 92800 Puteaux (FR)
(72) Inventor: ANEZIRIS, Christos, 09599 Freiberg (DE); VERES, Daniel, 09600 Oberschöna (DE); GEHRE, Patrick, 09599 Freiberg (DE); PARR, Chris, 78400 Chatou (FR)
(74) Representative: Lavoix

(57) **Abstract**

The present invention concerns the field of refining metal melts or slags and provides in particular a reactive material based on calcium aluminate and carbon, its process of preparation and various methods for refining metal melts using the same.

## Description

The present invention concerns the field of refining metal melts or slags, in particular by separating non-metallic inclusions. Non-metallic inclusions may be present in a molten metal either as introduced from the outside environment (exogenous inclusions) or as formed within the metal (endogenous inclusions). They may be formed during the production and/or or the further processing of the material.

Metal inclusions affect the degree of purity of the metal and, hence, the performance of the materials. Non-metallic inclusions may thus be responsible, e.g. for the loss in strength, the elongation, the fracture toughness and the fatigue performance of the metal components. During loading, stress concentrations are generated in the proximity of inclusions.

Attempts have been made to remove non-metallic inclusions and ensure the requirements of high purity metal castings are achieved.

The reduction of non-metallic inclusions in metal melts or slags can be generally achieved in two different ways:
- avoidance of inclusions formation with the aid of the metallurgical processing; or
- deposition of inclusions on ceramic surfaces.

Ceramic filters have been used in metal casting applications such as foundries for several years. The capture of solid non-metallic inclusions by ceramic surfaces typically takes place in three steps: (i) the solid nonmetallic inclusions are transported from the bulk melt to the ceramic surface, (ii) the solid non-metallic inclusions are attached to the ceramic surface, and (iii) the solid non-metallic inclusions undergo solid-state sintering with the ceramic surface.

DE102011109681 discloses a ceramic filter for molten metal filtration on the basis of current molten metal filter geometries, where the ceramic filter is provided as a support material with an active surface coating, which has the same chemical phase components as the inorganic non-metallic inclusions contained in the molten metal to be filtered. DE102011109684 discloses a filter the surface of which comprises a material that reacts with the dissolved gases and/or metallic impurities of the metal melt to be filtered. None of these documents disclose the introduction of calcium aluminates in the coatings.

In order to meet the increasing demands for high purity metals such as high security steels, ceramic foam filters (CFF), especially those based on zirconia and carbon bonded alumina, have been successfully employed for years. Zirconia filters, however, have the disadvantage of exhibiting creep, which decreases the flow rate during casting because of the changing filter geometry. In contrast, carbon bonded systems exhibit negligible creeping due to the high amount of carbon.

Today the filtration efficiency of non-metallic inclusions below 50 µm is less than 75% and especially for inclusions less than 10 µm, lower than 60%. In case that these fine inclusions (1 to 10 µm) would pass the filter, they tend to agglomerate and form critical agglomerates and clusters of inclusions in the range of 150 to 300 µm. These big clusters of inclusions detrimentally affect the mechanical properties of the metal components such as steel components. It is thus desirable to provide solutions for capturing inclusions efficiently in particular fine inclusions of less than 10 µm.

These aims and others have been found to be reached by the invention providing mixtures of calcium aluminate with carbon.

According to a first object, the present invention thus concerns a reactive material comprising calcium aluminate and carbon.

Generally, said reactive material comprises:
- from 50 to 95%, in particular 50 to 80% in weight of calcium aluminate;
- from 5 to 50%, in particular 20 to 50% in weight of carbon.

The reactive material may include optional ingredients such as additives, such as up to 10 % in weight additives.

Additional ingredients may include gelifying and/or solidifying agents such as sodium alginate and calcium chloride.

Suitable additives include additives to improve the catalytic performance of the material. Additives can be in particular: boric acid, citric acid, castamend VP9 L, cobtrapum K 1012, ammoniumlignisulfonate...

According to an embodiment, the reactive material may further comprise one or more metals chosen from the group consisting in iron, nickel, aluminum, zircon, magnesium, silicon, titanium, or a combination thereof. Such metals or other metal additives can be incorporated in the reactive material of the invention to increase the catalytic performance of the metal melt, for instance the iron containing melt.

As used therein, "metal" encompasses both ferrous and non-ferrous metal.

As used herein, "calcium aluminate" refers to any mixture of lime (CaO) and alumina (Al₂O₃), such as the various calcium aluminates of formula CA, CA2, CA6, where C represents CaO and A represents Al₂O₃.

As used herein, "carbon" refers to carbon in any form and/or from any source and includes graphite, black carbon, soot, pitch, synthetic pitch (such as Carbores P), carbon generated via pyrolysis of resin, pitch binder, paper or wood or carbon nanotubes or a combination of all these approaches.
In particular, carbon nanotubes may be used to increase the reactivity.
"Refining" as used therein refers to any process increasing the purity of metal melt or slags. It includes in particular filtering the non-metal inclusions from the melt/slag, as well as any other methods to separate non-metal inclusions from the melt/slag.

"Reactive" as used therein refers to the capacity of the material of the invention to react with the metal melt or slag to create a layer capable of collecting the non-metal inclusions.

"Collecting" as used therein refers to the retaining of non-metal inclusions by the layer of material as to separate them from the melt/slag.

It has been found that the reactive material can interact with inclusions and remove non-metallic inclusions through two ways:
a) provide functional coatings on surfaces of refractories or additive aggregates in metallurgy applications; and/or
b) improve the filtration efficiency of ceramic filters for molten metal filtration.

More particularly, combinations of calcium aluminate with carbon have been found to act as reactive collectors of fine inclusions and to provide a number of advantages:
If the reactive material of the invention comprising calcium aluminate carbon comes in contact for instance with iron or steel melt, the following mechanisms are activated:
   I) The calcium aluminate reacts with the carbon and form calcium aluminate suboxides, calcium and/or aluminum which are deposited on a calcium aluminate decarburized or partially decarburized zone in contact with the metal melt. They generate a very active thin calcium aluminate layer due to the reaction of these suboxides with the oxygen of the metal melt. This very active thin layer between the decarburized zone and the metal melt is contributing as an active collector of endogenous inclusions.
   II) In addition, the high vapor pressure of calcium with an associated intense bath stirring promotes collision and coalescence of the alumina fine inclusions in the melt. With the aid of calcium vapor and the resulting coalescence of the alumina inclusions through collision, their removal from the steel is enhanced compared to the small non-buoyant alumina inclusions which must first cluster on their own (without forced convection) before they are able to separate from the liquid steel.
   III) Depending on the applied composition of calcium aluminates (CA, CA2, or CA6), the softening point and or the melting point of the mixture can be adjusted in order to promote an additional capturing by increasing the roughness of the thin active layer which copies the surface of the carbon free calcium aluminate layer underneath. A higher roughness leads to higher wetting angle against the iron melt which promotes a higher agglomeration via collision of the fine inclusions.
   IV) Based on the softening of the active fine layer, the endogenous inclusions are better trapped mechanically during their collision on the active surface and a larger contacting surface is available for fixing by interring the inclusions on the surface of the thin active layer.

According to an embodiment, the reactive material of the invention is typically able to remove more than 60% of fine non-metallic inclusions of less than 10 µm, preferably more than 70%, more preferably about 80%.

As used herein the size of inclusions or filter porosity refers to the average diameter (in number) of the particles or of the pore.

The material of the invention may be used as a coating composition on refractories.

According to another object, the present invention thus also concerns a coating composition comprising the material of the invention. Typically, said coating composition may be used for coating filters for metal melts or slags.

According to another object, the present invention concerns the process of preparation of the material of the invention, said process comprising treating a mixture of calcium aluminate and carbon at a temperature comprised between 550 to 1600°C, typically between 700 and 900°C, under reduced atmosphere.

According to an embodiment, said reaction may be conducted *in situ* so that the material is prepared within the metal melt subject to the heat treatment, into which carbon and calcium aluminate are added.

According to an alternative embodiment, said process may be conducted by applying a heat treatment to the combination of calcium aluminate and carbon.

Said ceramic may be used for filters for metal melts or slags.

According to another object, the present invention thus concerns a filter for metal melts or slags comprising the reactive material of the invention.
According to an embodiment, said filter may be made of the ceramic of the invention. According to an alternative embodiment, said filter may be made of a ceramic, coated with the coating composition of the invention, where said ceramic acts as a carrier material of the active material of the invention.

Said filter as referred herein may designate any filter generally used for refining metal melts or slags. Its structure may be of the usual types such as open-cell foam, honeycomb geometry, spaghetti filter geometry, perforated filter geometry, mashed fibers structure, fibrous tissue structure, sphere structure.

Typically, the ceramic as a carrier material and the active surface coating may have the same chemical-phase components of calcium aluminate and carbon.

However, there is no restriction on the nature of the filter to be used as a substrate for the coating of the invention. Filters of various compositions such as polyurethane may be considered as suitable substrates.
The use of such filters may be beneficial to downsize the costs involved by the filter. According to a further object, the present invention concerns the process of coating a ceramic filter with the coating of the invention. Generally, said process comprises the step of:
- providing a slurry comprising calcium aluminate and carbon in water;
- coating the filter by spraying said slurry on the filter;
- optionally drying the coated filter; and
- subjecting to heat treatment said coated filter.

Generally the slurry may also comprise one or more additives as defined above. The slurry concentration in solids is generally between 40 and 80% (weight/volume).

The heat treatment (pyrolysis) is typically conducted at a temperature comprised between 550 to 1600°C, typically between 700 and 900°C under reduced atmosphere.

Said filter may be a common ceramic filter or can be a filter comprising the ceramic of the invention.

The present invention also concerns a refractory component coated with the coating composition of the invention.

According to a further object, the present invention also concerns a refractory coated with the reactive material of the invention.
The reactive material may be in the form of aggregates and may further comprise further oxide aggregates such as Alumina, Zirconia, Magnesia, Calcia and or metals such as silicon, aluminum etc.. Said aggregates may be fine grained (with grains lower than 100 µm) or coarse grained (with grains above 100 µm, up to 10 mm).
Said refractory components may be part of metallurgical devices, such as nozzles or slides gates for instance in continuous casting of metal melts.
Aggregates may be made by forming beads wit gelifying agent such as sodium alginate, or by spray drying or by pelletizing.

According to another object, the present invention also concerns a method for refining a metal melt or slag comprising contacting said material of the invention with said metal melt or slag.

Generally, the contacting step may be achieved by various means such as:
a) applying the material on the metal melt as a covering powder so as to form an aggregate;
b) applying the material in the form of a particulate such as powder, granules, spheres, beads, aggregates, or pellets into the melt, such as through porous plugs of the vessel containing the slag or melt;
c) applying the material as a lining of the vessel containing the slag or melt; or
d) refining the metal melt or slag with a filter, such as a filter coated with the active material of the invention, or a filter comprising the ceramic of the invention.

It has been hypothesized that the metal melt/slag catalytically contributes to the refining with the reactive material.
When contacted with the metal, the reactive material and the metal interact so as to create a layer comprising suboxides able to catch and collect the non-metal inclusions.

In embodiment b), beads/aggregates of the reactive material may be prepared by application/adaptation of the method disclosed by Oppelt et al., Metallurgical and Materials Transactions B, 2014, 453, 2000-2008.
In short, such beads/aggregates may be prepared by mixing calcium aluminate and carbon with a gelifying agent such as sodium alginate and a solidifying agent, such as calcium chloride, followed by sieving, drying and pyrolysing.
The beads so obtained may be incorporated with argon gas via a porous plug to a metal melt in steel ladle, or in a steel treatment ladles or in the converter.
The present invention also concerns such beads comprising the active material with a gelifying agent, their process of preparation and the corresponding refining method using the same.

### Description of the Figures:

Fig. 1: Carbon bonded alumina substrate coated with a CA2/C-functional coating.
Fig. 2: Evolution of temperature and oxygen of the steel melt.
Fig. 3: Prismatic filter sample after the dipping test in steel melt at 1650°C approx.
Fig. 4: In situ formed thin calcium aluminate - layer contributing as collector for inclusions.
Fig. 5: In situ formed thin calcium aluminate - layer and its roughness.
Fig. 6: The thin calcium aluminate layer contributing as functional collector of alumina inclusions.

The following examples are given for illustrative and non-limitative purpose of the present invention.

### Example I

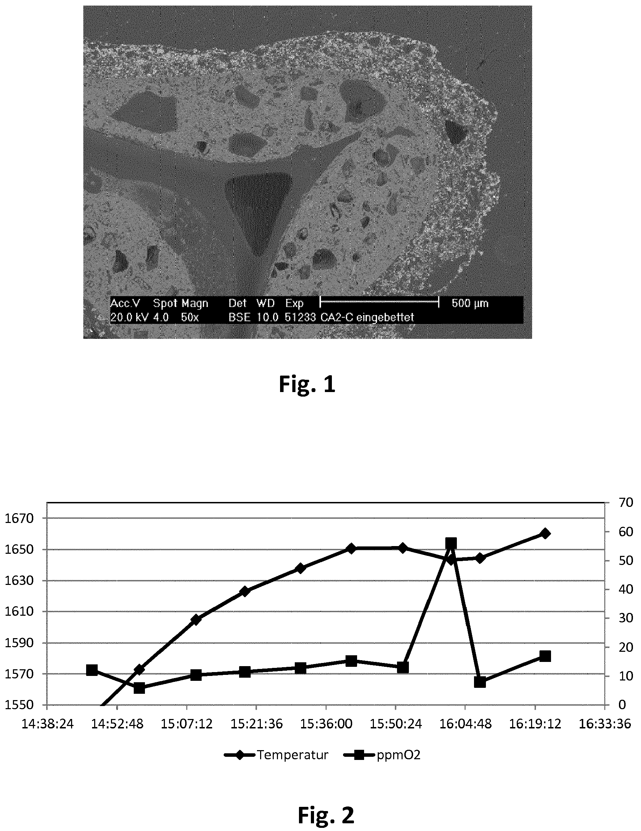

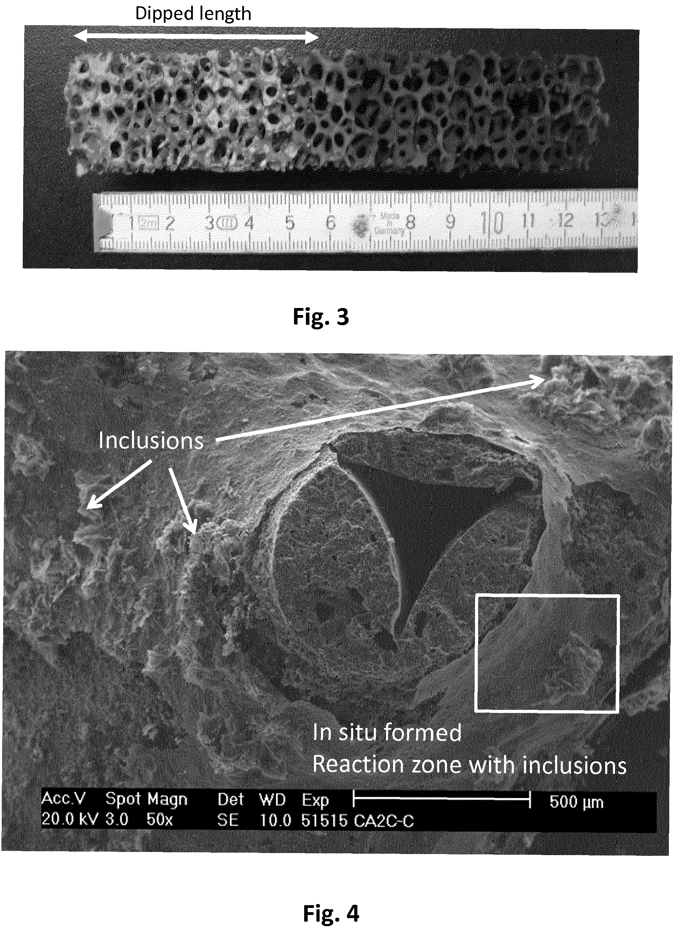

a) A water based spraying slurry containing solids of 64 mass.% of CA2 calcium aluminate, 30 mass.% Carbores P (synthetic pitch), 2.7 carbon black and 3.3 graphite has been prepared. The solid content of the spraying slurry was 65 mass.% and boric acid, citric acid, castamend VP 95 L, contrapum K 1012 and ammoniumlignisulfonate have been used as additives. An already pre-pyrolised 10 pore per inch carbon bonded alumina foam filter has been coated with the spraying slurry, dried and afterwards pyrolysed at 800 °C in a coke bed. In Fig. 1 the carbon bonded alumina substrate with the CA2 /carbon coating after the pyrolisis is shown. Similar coatings have been achived with materials comprising 95% calcium aluminates and 5% carbon.
b) A prismatic filter as coated above (Fig. 3) has been dipped in a 42CrMo steel melt (in a special melting device with full controlled atmosphere, Ar blowing, 0 ppm oxygen in the atmosphere above the melted bath) that has been oxidised with the aid of iron oxide and deoxidised with the aid of Al. In Fig. 2 the evolution of the temperature and the oxygen of the steel are plotted. After deoxidising of the steel melt the prismatic filter sample has been dipped in the steel for 30 sec and has been rotated with 30 rpm at approx. 1650 °C. After dipping the filter sample has been taken out and has been cooled down in a Argon champer before shifted out of the melting device.

Fig. 4 demonstrates the formation of an *in situ* thin reactive layer on the surface of the CA2/carbon - coating which is functionalised. On the top of this *in situ* layer, alumina inclusions have been detected.

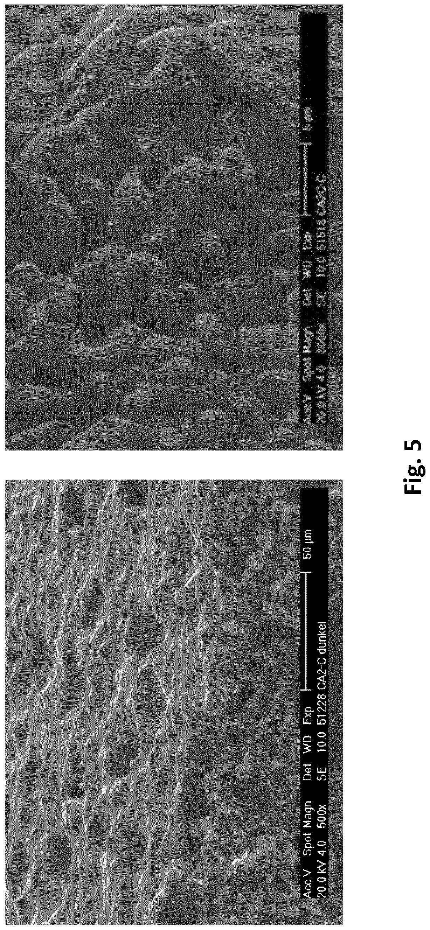

In Fig. 5 this thin layer on the CA2-coating is demonstrated; the thin layer "takes the shape" of the substrate beneath (Fig. 5, right). A reactive layer with high roughness as an effective collector is generated.

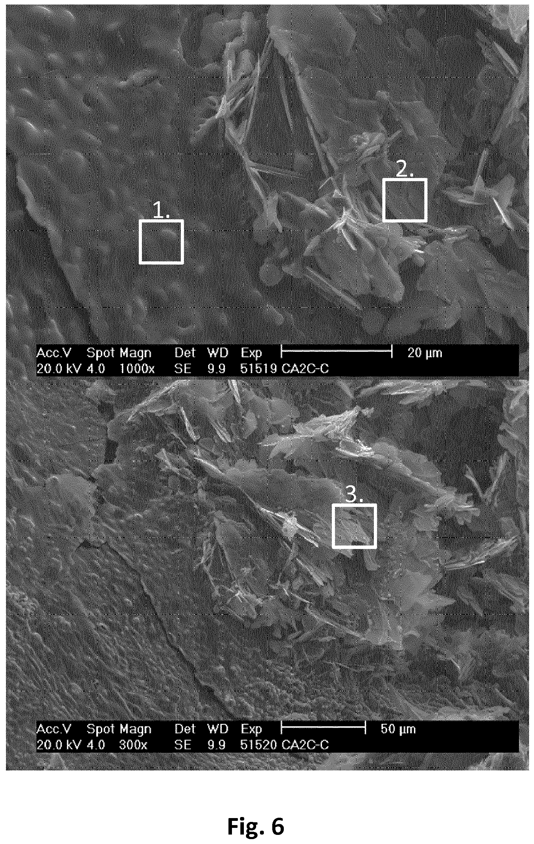

In Fig. 6 the capturing of alumina inclusions on the in situ formed thin CA2-layer is demonstrated. The carbon in the EDX analysis comes from the sputtering with carbon of the sample for generating the SEM-micrographs.

Inclusions areas numbered 1, 2 and 3 in Figure 6 were analyzed. The element analysis of these inclusions was determined and is detailed below:
#1:

| ***Element*** | ***Wt* %** | ***At %*** |
|---|---|---|
| *C K* | 07.19 | 11.60 |
| *O K* | 49.47 | 59.93 |
| *AlK* | 32.34 | 23.23 |
| *CaK* | 10.36 | 05.01 |
| *FeK* | 00.64 | 00.22 |

#2:

| ***Element*** | ***Wt %*** | ***At %*** |
|---|---|---|
| *C K* | 07.88 | 12.25 |
| *O K* | 51.50 | 60.17 |
| *Mgk* | 00.70 | 00.54 |
| *AlK* | 37.81 | 26.19 |
| *Cak* | 01.04 | 00.49 |
| *MnK* | 00.21 | 00.07 |
| *FeK* | 00.85 | 00.29 |

#3:

| ***Element*** | ***Wt* %** | ***At %*** |
|---|---|---|
| *C K* | 09.40 | 14.26 |
| *O K* | 53.19 | 60.58 |
| *MgK* | 00.23 | 00.17 |
| *AlK* | 36.72 | 24.80 |
| *Cak* | 00.30 | 00.14 |
| *FeK* | 00.14 | 00.05 |

### Example II

An impregnation slurry based on solids of 66 mass.% of CA6/calcium aluminate, 30 mass.% Carbores P (synthetic pitch), 2.7 carbon black and 3.3 graphite has been prepared. The solid content of the slurry was 77 mass.% and boric acid, citric acid, castamend VP 95 L, contrapum K 1012 and ammonium lignisulfonate have been used as additives. In the impregnation slurry a polyurethane (PE) foam of 10 pore per inch has been dipped, the coated PE foam has been treated with air to open the functional macro pores and after drying a spraying slurry with 65 mass.% solids has been applied. After second drying, the filter has been pyrolysed at 800 °C in a coke bed.

This example shows that a coating made of the material of the invention can be achieved on a skeleton (here plastic) of different composition.

The filter as coated above may then be used for refining a metal melt by conducting step b) as in Example I above.

### Example III

Carbon/Calcium aluminate composite beads/aggregates have been prepared using a gel-casting process by alginate gelation as disclosed by Oppelt et al. in Metallurgical and Materials Transactions B, 2000, 45B, 2014, 2000-2008.
This method is based on the gelation of sodium alginate in direct contact with calcium ions in an aqueous solution as solidifying agent. Controllable casting is possible through the use of sodium alginate, stabilizer, and plasticizer. Sodium alginate serves as a gelation reagent, which can be dissolved in deionized water at room temperature. It is a polysaccharide, which consists of mannuronic and guluronic acids that are combined in sequential block structures.

During the dropping process, sodium alginate and calcium ions react by attracting each other's molecular chains and form a three-dimensional network which then lead to the formation of beads/aggregates with diameters between 0.5 mm up to 5 mm.
64g calcium aluminate and 36g carbon (in the form of synthetic pitch like Carbores from Rütgers Germany; graphite and soot) powders were mixed (64 mass.% of CA2 calcium aluminate, 30 mass.% Carbores P, 2.7 carbon black and 3.3 graphite).

The powder mixture and 29ml water with 1 g additive mixture based on 0.4 g the gelifying agent (sodium alginate) and 0.6 gr. Darvan C (Vanderbilt company) as plasticizer, were homogenized for 15 minutes and finally milled for 3 hours in a polypropylene chamber with zirconia milling media. The powder to water ratio was 70:30.
The composite suspension was added dropwise into the liquid with 99.2 ml water with a solidifying agent of 0.8 g calcium chloride, and precipitation occurred. The wet green beads were removed from the water with the aid of a sieve and subsequently dried for 24 hours at 313.15 K. Afterwards the beads/aggregates were pyrolysed at 800 °C.
These beads/aggregated can be incorporated with Argon gas via the porous plug to a metal melt in steel ladle or in a steel treatment ladle or in the converter.

## Claims

1. A reactive material comprising :
- from 50 to 95% in weight of calcium aluminate;
- from 5 to 50% in weight of carbon;
and optionally one or more additives or metals.

2. A coating comprising the material of claim 1.

3. A ceramic comprising the material of claim 1.

4. A filter for metal melts or slags comprising the ceramic of claim 3 and/or the coating of claim 3.

5. A refractory component coated with a coating of claim 2.

6. The refractory component according to claim 5 further comprising oxide aggregates such as Alumina, Zirconia, Magnesia, Calcia and or metals such as silicon, aluminum etc..

7. A method for refining a metal melt or slag comprising contacting said material of claim 1 with said metal melt or slag.

8. The method according to claim 7 wherein the contacting step comprises applying the active material to the metal melt as a covering powder so as to form an aggregate.

9. The method according to claim 7 wherein the contacting step comprises applying the active material as granules, powder aggregates or beads or spheres into the melt such as through porous plugs of the vessel containing the slag or melt.

10. The method according to claim 7 wherein the contacting step comprises applying the active material as a lining of the vessel containing the slag or melt.

11. The method of claim 7 wherein the contacting step comprises refining the metal melt or slag with a filter according to anyone of claims 5 to 7.

12. The process of preparation of the material according to claim 1 comprising treating a mixture of calcium aluminate and carbon at a temperature comprised between 550 to 1600°C under reduced atmosphere.

13. A process of coating a ceramic filter with the coating of claim 2 comprising the step of:
- providing a slurry comprising calcium aluminate and carbon in water;
- coating the filter by spraying said slurry on the filter;
- optionally drying the coated filter; and
- subjecting to heat treatment said coated filter.

14. Process according to claim 13 wherein the concentration of solids in the slurry is between 40 and 80% (weight/volume).

15. The process according to claim 13 or 14 wherein the heat treatment (pyrolysis) is conducted at a temperature comprised between 550 to 1600°C, typically between 700 and 900°C under reduced atmosphere.
